(19) Europäisches Patentamt
European Patent Office
Office européen des brevets

(11) **EP 4 062 580 B1**

(12) **EUROPEAN PATENT SPECIFICATION**

(45) Date of publication and mention
of the grant of the patent:
**11.10.2023 Bulletin 2023/41**

(21) Application number: **19805664.0**

(22) Date of filing: **18.11.2019**

(51) International Patent Classification (IPC):
**H04L 9/08** (2006.01)

(52) Cooperative Patent Classification (CPC):
**H04L 9/0852;** H04L 2209/122

(86) International application number:
**PCT/EP2019/081684**

(87) International publication number:
**WO 2021/098947 (27.05.2021 Gazette 2021/21)**

(54) **QUANTUM BIT DECODING APPARATUS, SYSTEM AND METHOD**

QUANTENBIT-DECODIERUNGSGERÄT, -SYSTEM UND -VERFAHREN

APPAREIL, SYSTÈME ET PROCÉDÉ DE DÉCODAGE DE BITS QUANTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.09.2022 Bulletin 2022/39**

(73) Proprietor: **Telefonaktiebolaget LM Ericsson
(publ)
164 83 Stockholm (SE)**

(72) Inventors:
• **CATUOGNO, Tommaso
56100 Pisa (IT)**
• **CAVALIERE, Fabio
56100 Pisa (IT)**
• **RALLI, Menelaos
56100 Pisa (IT)**

(74) Representative: **Ericsson
Patent Development
Torshamnsgatan 21-23
164 80 Stockholm (SE)**

(56) References cited:
**CN-A- 110 224 819       GB-A- 2 550 263
US-A1- 2007 116 286**

## Description

## Technical Field

The invention relates to quantum bit decoding apparatus and to a quantum bit decoding system comprising the quantum bit decoding apparatus. The invention further relates to a quantum key distribution system and to communications network nodes. The invention further relates to a method of decoding quantum bits encoded on a photon.

## Background

Quantum communication systems exploit the possibility of transmitting information encoded in quantum states, prepared in such a way that an eavesdropper in between two communicating partners unavoidably introduces a detectable disturbance. In optical communications, the quantum information is encoded over a physical property of a photon, as for example polarization state, phase or spin.

Quantum Key Distribution, QKD, provides a solution to the problem of key distribution in symmetric encryption systems. In theory, quantum encryption should be applied to the whole message that is to be transmitted, using one-time pad encryption. However, this would unacceptably compromise capacity and latency of the communication channel, since feasible QKD systems can only work up to a few Mbit/s and require processing time for the sender and receiver to agree the final key, free of errors. In practice, QKD is only used to produce and distribute the key, not to transmit message data. The key is then used with a classical encryption algorithm to encrypt and decrypt a message, transmitted over a classical high capacity communication channel.

In QKD based on the BB84 protocol, as described for example by A. Ruiz-Alba et al "Practical Quantum Key Distribution based on the BB84 protocol", Waves, 2011, pages 4-14, the sender, Alice, generates a random bit, i.e. a "0" or a "1", and encodes it in one of two different bases over a properly chosen physical property of the photon. The first basis is then used to encode the "0" bits and the other base for the "1" bits.

Since the receiver, Bob, does not know Alice's basis selection, he measures the basis of the incoming photons by randomly choosing one of the possible two basis. If he uses the same basis used by Alice, he will measure deterministically the correct bit value. Conversely, if he chooses the wrong basis, the result of his measurement will be a random projection on the possible values of the encoded basis, which gives the correct result only with a 50% probability. After a long sequence of photons has been exchanged, Alice and Bob compare the basis they have respectively employed for encoding and measuring, communicating via a "classical" channel. They keep only the random bits generated and detected with matched basis, which are said to constitute the "sifted keys". In an ideal system without noise, imperfections, and disturbances, the sifted keys are identical, and can be used as a private key.

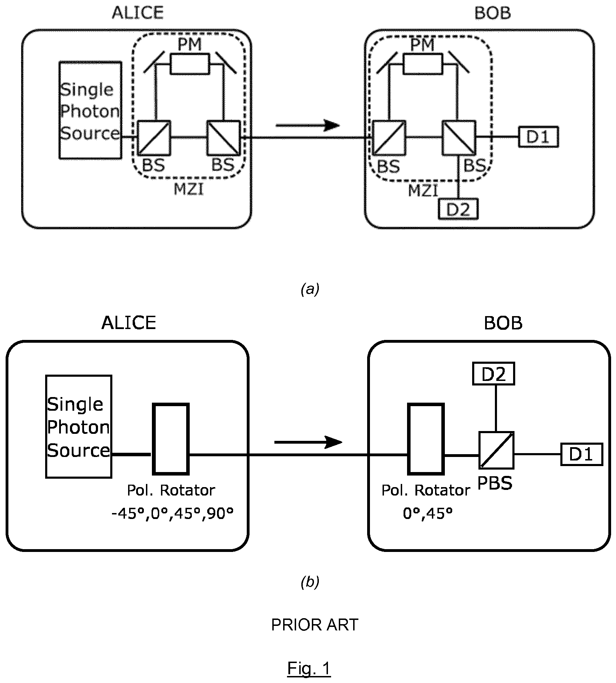

Two common implementations of the BB84 protocol use the polarization or the phase property of the photon as bases. For the polarization encoding case, illustrated in Figure 1(a), the sender, Alice, encodes on two different polarization bases, 45° rotated relative to each other, called rectilinear, 0° and 90°, and diagonal, 45° and 135°, that are selected using a polarizer. At the receiver, Bob, a polarization beam splitter, PBS, transforms the polarization encoding of the photon into a spatial decoding, with the photon being received by one of two single photon avalanche photodetectors, SPD. For the phase encoding scheme, illustrated in Figure 1(b) and reported, for example, by Yan Hui et al, "Efficient Phase-Encoding Quantum Key Generation with Narrow-Band Single Photons", Chinese Physics Letters, Volume 28, Number 7, 20 May 2011, the sender uses a Mach-Zehnder Interferometer, MZI, to introduce one of four different phase shifts, $\phi_a$, for example $\phi_a = \left[ 0, \frac{\pi}{2}, \pi \frac{3}{2}\pi \right]$. The first two phase shifts encode a '0' bit, the second two a '1' bit. The receiver then uses a second MZI to randomly introduce one of two-phase shifts, $\phi_b$, for example $\phi_b = \left[ 0, \frac{\pi}{2} \right]$. The spatial decoding is here made considering the differential phase $\Delta\phi = \phi_a - \phi_b$.

QKD may also be implemented based on photon spin, as reported for example by Giuseppe Vallone et al, "Free-space quantum key distribution by rotation-invariant twisted photons", Physics Review Letters, volume 113, 060503 (2014).

In practical implementation of any discrete variable QKD schemes, the limiting factor that strongly limits the adoption of the technology is the high cost of the optical receiver devices, that represent the most critical part of actual QKD systems. Particularly, any implementation of QKD protocol requires at least two SPDs. Furthermore, the more the greater the number of qubits encoded per photon, the higher the number of SPDs, which increases exponentially with respect to the number of qubits. That is the reason why QDK protocols employing multi-qubit per photon are not intensively studied and proposed.

United States Patent Application publication document US 2007/116286 A1 discloses an apparatus for qubit decoding which makes efficient use of single photon avalanche photodetectors via, inter alia, random modulation of phase delays.

United Kingdom Patent Application GB 2550263 A discloses a Quantum Key Distribution apparatus comprising delay lines.

Chinese Patent Application publication document CN 110224819 A discloses an on-chip decoder for the BB84 protocol using delay lines.

## Summary

It is an object to provide an improved quantum bit decoding apparatus according to independent claim 1. It is a further object to provide an improved quantum bit decoding system according to independent claim 2. It is a further object to provide improved methods of quantum bit decoding according to independent claims 8 and 9.

An aspect of the invention provides quantum bit decoding apparatus configured to receive a photon having a quantum bit, qubit, encoded in a property of the photon. The quantum bit decoding apparatus comprises demodulation apparatus, optical delay apparatus and detection apparatus. The demodulation apparatus comprises an optical modulator and an optical router. The optical modulator is configurable to randomly apply one of a plurality of modulation values to said property of the photon; the modulation values are configured for decoding the qubit. The optical router is provided after the optical modulator and is configured to route the photon according to the qubit. The optical delay apparatus comprises an optical combiner, a first optical path from a first output of the optical router to a first input of the optical combiner and a second optical path from a second output of the optical router to a second input of the optical combiner. The second optical path has a different optical path length to the first optical path to introduce a time delay between the first and second optical paths. The detection apparatus is configured to detect a photon received from the optical combiner. The detection apparatus is operable to determine whether a detected photon is delayed relative to a reference time and to determine the qubit according to the determined time delay.

The qubit decoding apparatus enables a reduction in the complexity of the decoder apparatus required to decode qubits, replacing the prior art standalone spatial decoders, such as the BB84 protocol decoders shown in Figure 1, with a temporal decoder. This may enable a lower cost qubit decoding apparatus with respect to the prior art decoding schemes and may enable qubit decoding apparatus to be provided at a comparable cost to standard (non-quantum) decoders.

In an embodiment, the detection apparatus is further operable to determine the time delay applied to the detected photon relative to the reference time and to determine the qubit according to the determined time delay.

In an embodiment, the detection apparatus comprises an optical receiver configured to detect a photon received from the optical combiner and processing circuitry configured to determine whether a detected photon is delayed relative to a reference time and to determine the qubit according to the determined time delay.

The qubit decoding apparatus enables a reduction in the number of optical receivers, such as single photon avalanche photodetectors, that are required to decode qubits. Referring for example to the BB84 protocol decoders shown in Figure 1, the present qubit decoding apparatus enables a reduction from two photodetectors to a single photodetector.

An aspect of the invention provides a quantum bit decoding system configured to receive a photon having a plurality of quantum bits, qubits, respectively encoded in a plurality of properties of the photon. The quantum bit decoding system comprises a first decoding stage and an output decoding stage. The first decoding stage comprises a first optical modulator and a first optical router. The first optical modulator is configured to randomly apply one of a plurality of first modulation values to a first one of said plurality of properties of the photon; the first modulation values are configured for decoding a first one of the plurality of qubits. The first optical router is configured to route the photon according to said first one of the plurality of qubits. The output decoding stage comprises a plurality of quantum bit decoding apparatus respectively configured to receive the photon from the first optical router. The quantum bit decoding apparatus comprise demodulation apparatus, optical delay apparatus and detection apparatus. The demodulation apparatus comprises an optical modulator and an optical router. The optical modulator is configurable to randomly apply one of a plurality of modulation values to said property of the photon; the modulation values are configured for decoding the qubit. The optical router is provided after the optical modulator and is configured to route the photon according to the qubit. The optical delay apparatus comprises an optical combiner, a first optical path from a first output of the optical router to a first input of the optical combiner and a second optical path from a second output of the optical router to a second input of the optical combiner. The second optical path has a different optical path length to the first optical path to introduce a time delay between the first and second optical paths. The detection apparatus is configured to detect a photon received from the optical combiner. The detection apparatus is operable to determine whether a detected photon is delayed relative to a reference time and to determine the qubit according to the determined time delay. The quantum bit decoding apparatus are configured to decode a second qubit encoded in a second one of said plurality of properties of the photon. The first property of the photon and the second property of the photon are different, non-commutable properties of the photon quantum state.

The qubit decoding apparatus enables a reduction in the complexity of the decoder apparatus required to decode multiple qubits on a single photon, replacing prior art standalone spatial decoders with a temporal decoder stage. The qubit decoding system enables a reduction in the number of optical receivers, such as single photon avalanche photodetectors, that are required to decode multiple qubits. This may enable a lower cost multi qubit decoding system with respect to prior art decoding schemes and may enable qubit decoding systems to be provided at a comparable cost to standard decoding schemes. The qubit decoding system may therefore provide a solution to the penalty cost associated with the increase in photodetectors required by prior art decoder schemes for decoding multiple qubits per photon.

In an embodiment, the system further comprises a third decoding stage provided between the first decoding stage and the output decoding stage. The third decoding stage comprises a plurality of third optical modulators. The third optical modulators are configured to receive the photon from the first decoding stage depending on said first one of the plurality of qubits and are configured to output the photon to the output decoding stage. The third optical modulators are configured to randomly apply one of a plurality of third modulation values to a third one of said plurality of properties of the photon; the third modulation states are configured for decoding a third one of the plurality of qubits. The third property is a third, different non-commutable property of the photon quantum state.

In an embodiment, said non-commutable properties of the photon quantum state comprise polarization, phase and spin.

In an embodiment, the plurality of quantum bit decoding apparatus of the output decoding stage have different respective time delays between the respective first and second optical paths. The plurality of quantum bit decoding apparatus have a common detection apparatus. The common detection apparatus is configured to detect a photon received from an optical combiner of any of said plurality of quantum bit decoding apparatus. The common detection apparatus is operable to determine whether a detected photon is delayed by any one of the respective time delays relative to a reference time and to determine the qubit according to the determined time delay.

The qubit decoding system enables a reduction in the number of optical receivers, such as single photon avalanche photodetectors, that are required to decode multiple qubits.

In an embodiment, the common detection apparatus comprises an optical receiver configured to detect a photon received from a said optical combiner and processing circuitry configured to determine whether a detected photon is delayed by any one of the respective time delays relative to the reference time and to determine the qubit according to the determined time delay.

The qubit decoding system enables a single optical receiver to decode multiple qubits. This may enable a significant reduction in complexity and cost of a qubit decoding system for decoding multiple qubits. By employing time decoding instead of standalone spatial decoding, the qubit decoding system may enable a reduction in the number of optical receivers for decoding m qubits from $2^m$ to $2^k$, with generically $0 \leq k \leq m$.

Corresponding embodiments and advantages apply equally to the communications network nodes, QKD system and method described below.

An aspect of the invention provides a communications network node comprising quantum bit decoding apparatus. The quantum bit decoding apparatus is configured to receive a photon having a quantum bit, qubit, encoded in a property of the photon. The quantum bit decoding apparatus comprises demodulation apparatus, optical delay apparatus and detection apparatus. The demodulation apparatus comprises an optical modulator and an optical router. The optical modulator is configurable to randomly apply one of a plurality of modulation values to said property of the photon; the modulation values are configured for decoding the qubit. The optical router is provided after the optical modulator and is configured to route the photon according to the qubit. The optical delay apparatus comprises an optical combiner, a first optical path from a first output of the optical router to a first input of the optical combiner and a second optical path from a second output of the optical router to a second input of the optical combiner. The second optical path has a different optical path length to the first optical path to introduce a time delay between the first and second optical paths. The detection apparatus is configured to detect a photon received from the optical combiner. The detection apparatus is operable to determine whether a detected photon is delayed relative to a reference time and to determine the qubit according to the determined time delay.

An aspect of the invention provides a communications network node comprising quantum bit decoding system. The quantum bit decoding system is configured to receive a photon having a plurality of quantum bits, qubits, respectively encoded in a plurality of properties of the photon. The quantum bit decoding system comprises a first decoding stage and an output decoding stage. The first decoding stage comprises a first optical modulator and a first optical router. The first optical modulator is configured to randomly apply one of a plurality of first modulation values to a first one of said plurality of properties of the photon; the first modulation values are configured for decoding a first one of the plurality of qubits. The first optical router is configured to route the photon according to said first one of the plurality of qubits. The output decoding stage comprises a plurality of quantum bit decoding apparatus respectively configured to receive the photon from the first optical router. The quantum bit decoding apparatus comprise demodulation apparatus, optical delay apparatus and detection apparatus. The demodulation apparatus comprises an optical modulator and an optical router. The optical modulator is configurable to randomly apply one of a plurality of modulation values to said property of the photon; the modulation values are configured for decoding the qubit. The optical router is provided after the optical modulator and is configured to route the photon according to the qubit. The optical delay apparatus comprises an optical combiner, a first optical path from a first output of the optical router to a first input of the optical combiner and a second optical path from a second output of the optical router to a second input of the optical combiner. The second optical path has a different optical path length to the first optical path to introduce a time delay between the first and second optical paths. The detection apparatus is configured to detect a photon received from the optical combiner. The detection apparatus is operable to determine whether a detected photon is delayed relative to a reference time and to determine the qubit according to the determined time delay. The quantum bit decoding apparatus are configured to decode a second qubit encoded in a second one of said plurality of properties of the photon. The first property of the photon and the second property of the photon are different, non-commutable properties of the photon quantum state.

An aspect of the invention provides a quantum key distribution system comprising quantum bit encoding apparatus and one of a quantum bit decoding apparatus and a quantum bit decoding system. The quantum bit encoding apparatus is configured to encode at least one quantum bit in at least one respective property of a photon. The quantum bit decoding apparatus is configured to receive a photon having a quantum bit, qubit, encoded in a property of the photon. The quantum bit decoding apparatus comprises demodulation apparatus, optical delay apparatus and detection apparatus. The demodulation apparatus comprises an optical modulator and an optical router. The optical modulator is configurable to randomly apply one of a plurality of modulation values to said property of the photon; the modulation values are configured for decoding the qubit. The optical router is provided after the optical modulator and is configured to route the photon according to the qubit. The optical delay apparatus comprises an optical combiner, a first optical path from a first output of the optical router to a first input of the optical combiner and a second optical path from a second output of the optical router to a second input of the optical combiner. The second optical path has a different optical path length to the first optical path to introduce a time delay between the first and second optical paths. The detection apparatus is configured to detect a photon received from the optical combiner. The detection apparatus is operable to determine whether a detected photon is delayed relative to a reference time and to determine the qubit according to the determined time delay. The quantum bit decoding system is configured to receive a photon having a plurality of quantum bits, qubits, respectively encoded in a plurality of properties of the photon. The quantum bit decoding system comprises a first decoding stage and an output decoding stage. The first decoding stage comprises a first optical modulator and a first optical router. The first optical modulator is configured to randomly apply one of a plurality of first modulation values to a first one of said plurality of properties of the photon; the first modulation values are configured for decoding a first one of the plurality of qubits. The first optical router is configured to route the photon according to said first one of the plurality of qubits. The output decoding stage comprises a plurality of quantum bit decoding apparatus respectively configured to receive the photon from the first optical router. The quantum bit decoding apparatus comprise demodulation apparatus, optical delay apparatus and detection apparatus. The demodulation apparatus comprises an optical modulator and an optical router. The optical modulator is configurable to randomly apply one of a plurality of modulation values to said property of the photon; the modulation values are configured for decoding the qubit. The optical router is provided after the optical modulator and is configured to route the photon according to the qubit. The optical delay apparatus comprises an optical combiner, a first optical path from a first output of the optical router to a first input of the optical combiner and a second optical path from a second output of the optical router to a second input of the optical combiner. The second optical path has a different optical path length to the first optical path to introduce a time delay between the first and second optical paths. The detection apparatus is configured to detect a photon received from the optical combiner. The detection apparatus is operable to determine whether a detected photon is delayed relative to a reference time and to determine the qubit according to the determined time delay. The quantum bit decoding apparatus are configured to decode a second qubit encoded in a second one of said plurality of properties of the photon. The first property of the photon and the second property of the photon are different, non-commutable properties of the photon quantum state.

An aspect of the invention provides a method of quantum bit decoding. The method comprises a step of receiving a photon having a quantum bit, qubit, encoded in a property of the photon. The method comprises a step of randomly applying one of a plurality of modulation values to said property of the photon; the modulation values configured for decoding the qubit. The method comprises a step of applying a time delay to the photon depending on the qubit. The method comprises a step of detecting the photon. The method comprises a step of determining whether the detected photon is delayed relative to a reference time. The method comprises a step of determining the qubit according to the determined time delay.

In an embodiment, the photon has a plurality of qubits respectively encoded in a plurality of properties of the photon. The method comprises a step of randomly applying one of a plurality of first modulation values to a first one of said plurality of properties of the photon; the first modulation values are configured for decoding a first one of the plurality of qubits. The method comprises a step of randomly applying one of a plurality of second modulation values to a second one of the plurality of properties of the photon; the second modulation values configured for decoding a second one of the plurality of qubits. The method comprises a step of applying a time delay to the photon depending on at least one of the first qubit and the second qubit. The method comprises a step of detecting the photon. The method comprises a step of determining whether the detected photon is delayed relative to a reference time. The method comprises a step of determining the qubit according to the determined time delay. The first property of the photon and the second property of the photon are different, non-commutable properties of the photon quantum state.

In an embodiment, the method further comprises a step of randomly applying one of a plurality of third modulation values to a third one of said plurality of properties of the photon; the third modulation values are configured for decoding a third one of the plurality of qubits. The third property is a third, different non-commutable property of the photon quantum state. The time delay depends on at least one of the first qubit, the second qubit and the third qubit.

In an embodiment, the time delay depends on each of the qubits.

In an embodiment, said non-commutable properties of the photon quantum state comprise polarization, phase and spin.

Embodiments of the invention will now be described, by way of example only, with reference to the accompanying drawings.

The scope of protection is defined by the claims.

## Brief Description of the drawings

Figure 1 shows block diagrams of prior art QKD schemes;
Figures 2 to 4 are block diagrams illustrating embodiments of a quantum key decoding apparatus;
Figures 5 to 8 are block diagrams illustrating embodiments of a quantum key decoding system and embodiments of a communications network node;
Figures 9 to 11 are block diagrams illustrating embodiments of a quantum key distribution system; and
Figures 12 and 13 are flowcharts illustrating embodiments of method steps.

## Detailed description

The same reference numbers will used for corresponding features in different embodiments.

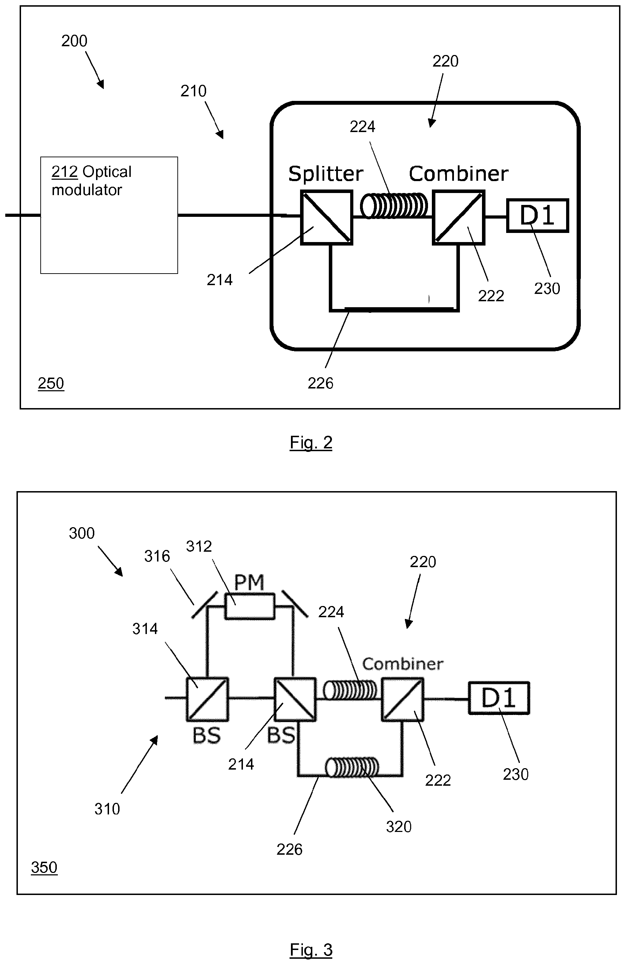

Referring to Figure 2, an embodiment of the invention provides quantum bit, qubit, decoding apparatus 200. The apparatus is configured to receive a photon having a quantum bit, qubit, encoded in a property, such as the polarisation, phase or spin, of the photon.

The qubit decoding apparatus comprises demodulation apparatus 210, optical delay apparatus 220 and detection apparatus 230.

The demodulation apparatus 210 comprises an optical modulator 212 and an optical router 214, which in this example comprises an optical splitter. The optical modulator is configurable to randomly apply one of a plurality of modulation values to the property of the photon. The modulation values are configured for decoding the qubit. The optical router 214 receives the photon after modulation by the optical modulator. The optical router is configured to route the photon according to the qubit.

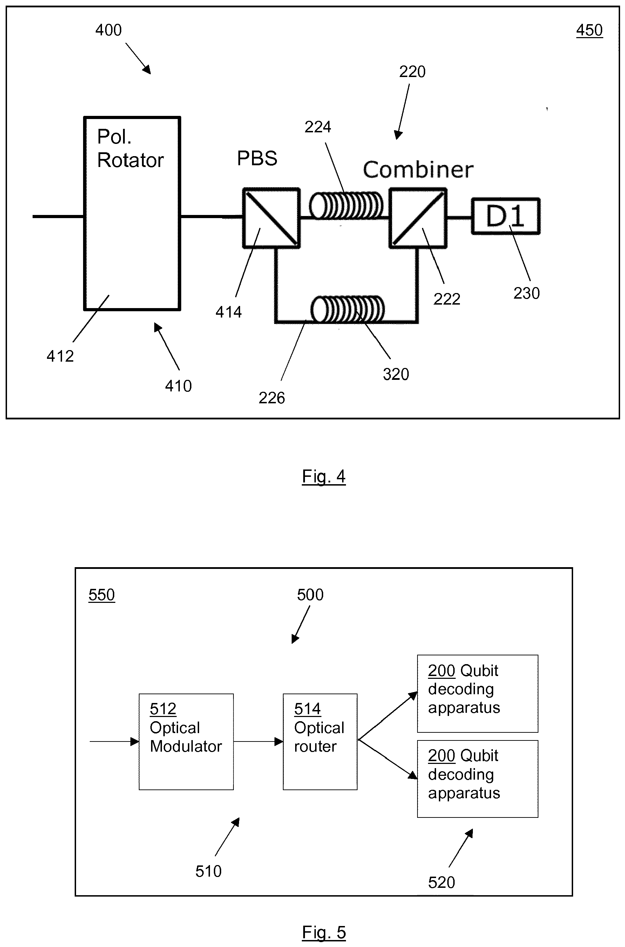

The optical delay apparatus 220 comprising an optical combiner 222, a first optical path 224 and a second optical path 226. The first optical path 224 is from a first output of the optical router to a first input of the optical combiner. The second optical path 226 is from a second output of the optical router to a second input of the optical combiner. The first optical path and the second optical path have different optical path lengths, so that there is a differential time delay between the first and second optical paths; that is to say, a photon travelling along the first path will by delayed by the time delay as compared to travelling along the second path, or vice versa. This may be achieved by including a delay line in one of the optical paths 224 but not in the other optical path 226 (as is illustrated in Figure 2) or by including delay lines of different lengths in the two optical paths (as in the embodiments illustrated in Figures 3 and 4).

The detection apparatus 230 is configured to detect a photon received from the optical combiner 222. The detection apparatus 230 is operable to determine whether the detected photon is delayed relative to a reference time and to determine the qubit according to the determined time delay. For example, if the photon is delayed, the qubit is determined to be a "1" bit and if the photon is not delayed, the qubit is determined to be a "0" bit.

In an embodiment, the detection apparatus 230 comprises an optical receiver, D1, such as a single photon avalanche photodetector, SPD, and processing circuitry configured to determine whether the detected photon is delayed relative to a reference time and to determine the qubit according to the determined time delay. In an embodiment, the processing circuitry is configured to check for the presence or absence of the time delay for a received photon with respect to a reference clock signal.

In an embodiment, the processing circuitry is operable to determine the time delay applied to the detected photon relative to the reference time. The processing circuitry is configured to determine the qubit according to the determined time delay.

As described above with reference to the BB84 protocol decoders, in the case where the optical modulator is set to the wrong modulation value, i.e. the wrong base is selected to measure, a quantum superposition of states between the two optical paths will exist that will collapse after optical receiver with an equal chance of having the time delay or not.

The qubit decoding apparatus 200 implements a change from the standalone spatial decoding employed in known BB84 decoder schemes, to temporal decoding. By introducing a relative time-delay between the first and second optical paths, and the optical combiner to recombine the optical paths, the two photodetectors, D1, D2, in the BB84 decoder schemes shown in Figure 1 may be replaced by detection apparatus 230 comprising a single optical receiver, D1, for receiving and detecting photons.

As a result, the overall number of photodetectors may be strongly reduced, as described further below. The apparatus 200 may be implemented for any kind of encoding used for QKD, as for example polarization, spin, or phase.

Referring to Figure 3, an embodiment of the invention provides qubit decoding apparatus 300 configured to receive a photon having a qubit encoded in the phase of the photon.

The optical modulator 310 of this embodiment is a Mach-Zehnder interferometer, MZI. One arm of the MZI extends from the input beam splitter, BS, 314 to the optical router 214, here a second BS, and the other arm extends from the input BS 314 to the optical router 214 via mirrors 316 and a phase modulator, PM, 312. As in the BB84 decoder shown in Figure 1(a), the phase modulator 312 may be configured to randomly apply one of two modulation values, phase shifts in this implementation, to decode either a "0" bit encoded in one of two phase shifts or a "1" bit encoded in one of a further two phase shifts. So, if the sender uses a Mach-Zehnder Interferometer, MZI, to apply one of four different phase shifts, for example, $\phi_a = \left[ 0, \frac{\pi}{2}, \pi, \frac{3}{2}\pi \right]$, where the first two phase shifts encode a '0' bit and the second two a '1' bit, the phase modulator 312 is configured to randomly apply one of two-phase shifts, for example, $\phi_b = \left[ 0, \frac{\pi}{2} \right]$, configured to decode the qubit. Whereas in the BB84 protocol MZI based decoder of Figure 1(a) the photon is routed from the output BS to either D1 or D2, i.e. a different spatial location, in the qubit decoding apparatus 300 the photon is routed from the output BS/optical router 214 into either the first optical path 224 or the second optical path 226 and the presence or absence of the time delay is used to determine the qubit as being a "0" bit or a "1" bit.

Referring to Figure 4, an embodiment of the invention provides qubit decoding apparatus 400 configured to receive a photon having a qubit encoded in the polarisation of the photon.

The optical modulator 412 of this embodiment is a polarisation rotator and the optical router 414 is a polarisation beam splitter, PBS. As in the BB84 decoder shown in Figure 1(b), the polarisation rotator 412 may be configured to randomly apply one of two modulation values, angles of polarisation in this implementation, to decode either a "0" bit encoded in one of two phase shifts or a "1" bit encoded in one of a further two phase shifts. So, if the sender uses a polarisation rotator to apply one of four angles of polarisation, to encode on one the rectilinear basis, 0° and 90°, or the diagonal basis, 45° and 135°, the polarization rotator 412 is configured to randomly apply 0° or 45° to resolve the qubit and the PBS routes the photon according to the qubit. Whereas in the BB84 protocol polarisation based decoder of Figure 1(b) the photon is routed from the PBS to either D1 or D2, i. e. a different spatial location, in the qubit decoding apparatus 400 the photon is routed from the PBS/optical router 414 into either the first optical path 224 or the second optical path 226 and the presence or absence of the time delay is used to determine the qubit as being a "0" bit or a "1" bit.

Referring to Figure 5, an embodiment of the invention provides a quantum bit, qubit, decoding system 500 configured to receive a photon having a plurality of qubits respectively encoded in a plurality of properties of the photon. The system 500 comprises a first decoding stage 510 and an output decoding stage 520.

The first decoding stage comprises a first optical modulator 512 and a first optical router 514. The first optical modulator 512 is configured to randomly apply one of a plurality of first modulation values to a first one of said plurality of properties of the photon. The first modulation values are configured for decoding a first one of the plurality of qubits. The first optical router is configured to route the photon according to said first one of the plurality of qubits.

The output decoding stage 520 comprises a plurality of qubit decoding apparatus 200, as described above with reference to Figure 2, respectively configured to receive a photon from the first optical router. Which qubit decoding apparatus receives the photon depends on the decoding of the first qubit performed by the first decoding stage; if the first qubit is determined to be a "0" bit, so the first optical router routes it to a first output, then a first one of the qubit decoding apparatus will receive the photon, and if the first qubit is determined to be a "1" bit, so the first optical router routes it to a second output, then a second one of the qubit decoding apparatus will receive the photon. Each qubit decoding apparatus 200 is configured to decode a second qubit encoded in a second one of said plurality of properties of the photon.

The first property of the photon and the second property of the photon are different, non-commutable properties of the photon quantum state. Two physical properties of a quantum system may be considered to be non-commutable (independent) if they can be measured without affecting the other i.e. they are not subject to the Heisenberg uncertainty principle. For example, phase, polarisation and spin.

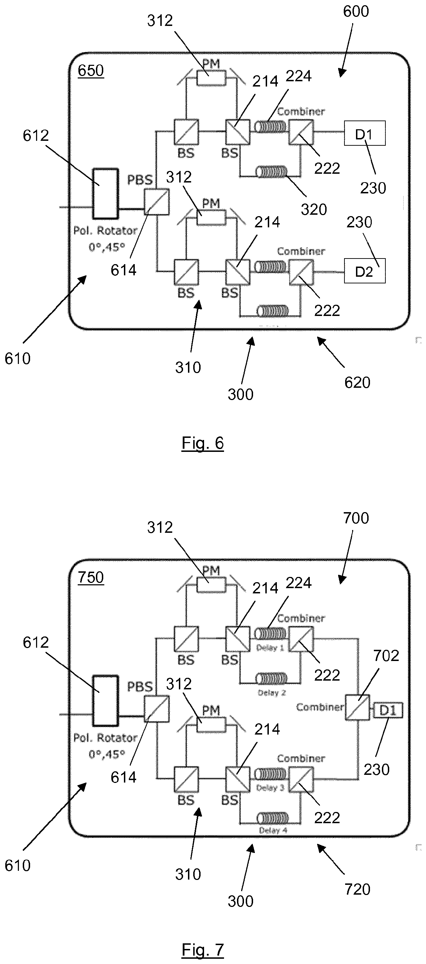

Referring to Figure 6, an embodiment of the invention provides a qubit decoding system 600 configured to receive a photon having two qubits respectively encoded in the polarisation and the phase of the photon.

In this embodiment, the first decoding stage comprises a polarisation rotator 612 and a PBS 614, as described above with reference to Figure 4.

The output decoding stage 620 comprises two qubit decoding apparatus 300, as described above with reference to Figure 3, each respectively configured to receive a photon from the PBS 614.

In an embodiment, the detection apparatus 230 comprises an optical receiver, D1, such as a single photon avalanche photodetector, SPD, and processing circuitry configured to determine whether the detected photon is delayed relative to a reference time and to determine the qubit according to the determined time delay. In an embodiment, the processing circuitry is configured to check for the presence or absence of the time delay for a received photon with respect to a reference clock signal.

In an embodiment, the processing circuitry is operable to determine the time delay applied to the detected photon relative to the reference time. The processing circuitry is configured to determine the qubit according to the determined time delay.

As compared to using BB84 decoders shown in Figure 1(a), the qubit decoding system 600 enables the number of optical receivers required to be reduced by one half.

Referring to Figure 7, an embodiment of the invention provides a qubit decoding system 700 configured to receive a photon having two qubits respectively encoded in the polarisation and the phase of the photon.

In this embodiment, the two qubit decoding apparatus 300 of the output decoding stage 720 have different time delays between their respective first and second optical paths. This may be achieved by each optical path including a delay line, the delay lines having different lengths, as shown in Figure 7. This means that four different time delays can be applied to a photon, depending on which route it takes to the combiner 222. Alternatively, this can be achieved by three of the optical paths including delay lines and the remaining optical path not including a delay line; one path therefore has no delay and the other three paths have three different time delays.

The two qubit decoding apparatus 300 share a common detection apparatus 230, comprising a single optical receiver D1 and processing circuitry. A further optical combiner 702 is provided route the outputs of the optical combiners 222 of the two qubit decoding apparatus 300 to the optical receiver D1.

The processing circuitry is configured to determine whether a detected photon is delayed by any one of the respective time delays relative to a reference time and to determine the qubit according to the determined time delay.

In an embodiment, the processing circuitry is configured to determine whether a detected photon is delayed by any one of the respective time delays relative to a reference clock signal and to determine the qubit according to the determined time delay.

As compared to using BB84 decoders shown in Figure 1(a), the qubit decoding system 700 enables the number of optical receivers required to be reduced from four to one.

In general terms, using BB84 phase based decoders, as shown in Figure 1(a), in the output decoding stage 620, 720 would require $2^m$ optical receivers, where m is the number of qubits to be decoded (in this case m = 2), and the number of optical receivers would increase exponentially with the number of qubits. In contrast, the described qubit decoding systems 600, 700 enable a reduction in the number of optical receivers to $2^k$ with $0 \leq k \leq m$, i.e. for m = 2 a reduction from 4 to 1. This can be very useful to adopt the best number of optical receivers, optimizing the tradeoff between cost reduction and time resolution required after photodetection.

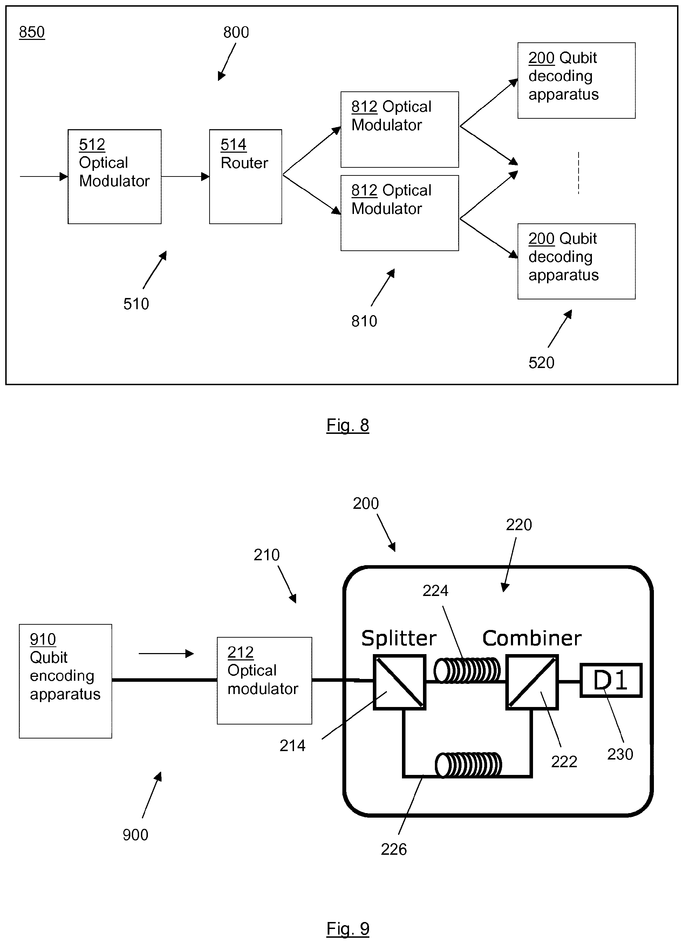

Referring to Figure 8, an embodiment of the invention provides a qubit decoding system 800 configured to receive a photon having three qubits respectively encoded in three non-commutable properties of the photon, for example polarisation, phase and spin.

The qubit decoding system 800 additionally comprises a third decoding stage 810 provided between the first decoding stage 510 and the output decoding stage 520. The third decoding stage comprises a plurality of third optical modulators configured to receive the photon from the first decoding stage depending on said first one of the plurality of qubits and to output the photon to the output decoding stage. The third optical modulators are configured to randomly apply one of a plurality of third modulation values to a third one of said plurality of properties of the photon. The third modulation values are configured for decoding a third one of the plurality of qubits. The third property is a third, different non-commutable property of the photon quantum state.

An embodiment of the invention provides a communications network node 250, 350, 450 comprising qubit decoding apparatus 200, 300, 400 as described above with reference to Figures 2 to 4.

An embodiment of the invention provides a communications network node 550, 650, 750, 850 comprising a qubit decoding system 500, 600, 700, 800 as described above with reference to Figures 5 to 8.

Referring to Figure 9, an embodiment of the invention provides a quantum key distribution, QKD, system 900 comprising qubit encoding apparatus 910 and qubit decoding apparatus 200, as described above with reference to Figure 2.

The qubit encoding apparatus is configured to encode a qubit in a property of a photon. The qubit decoding apparatus 200 is configured to receive the photon and determine the qubit, as described above.

In an embodiment, the detection apparatus 230 comprises an optical receiver, D1, such as a singled photon avalanche photodetector, SPD, and processing circuitry configured to determine whether the detected photon is delayed relative to a reference time and to determine the qubit according to the determined time delay. In an embodiment, the processing circuitry is configured to check for the presence or absence of the time delay for a received photon with respect to a reference clock signal.

In an embodiment, the processing circuitry is operable to determine the time delay applied to the detected photon relative to the reference time. The processing circuitry is configured to determine the qubit according to the determined time delay.

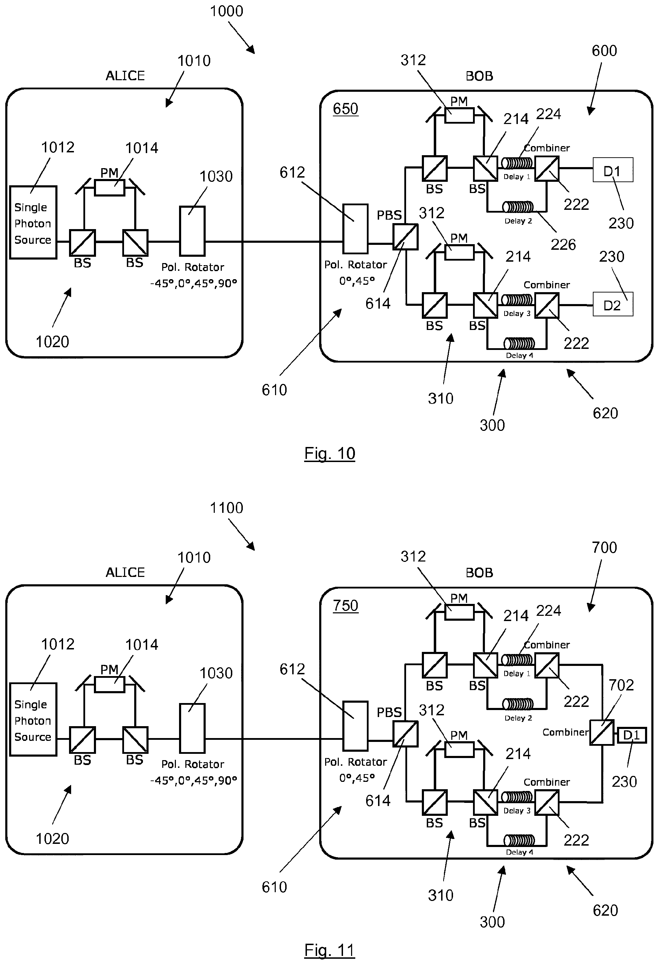

Referring to Figure 10, an embodiment of the invention provides QKD system 1000 comprising qubit encoding apparatus 1010 and a qubit decoding system 600, as described above with reference to Figure 6.

The qubit encoding apparatus 1010 comprises a single photon source 1012, a first optical modulator 1020 configured to encode a first qubit in a first property of a photon and a second optical modulator 1030 configured to encode a second qubit in a second property of the photon. The first property of the photon and the second property of the photon are different, non-commutable properties of the photon quantum state.

For example, the first optical modulator 1020 is a Mach-Zehnder Interferometer, MZI, comprising a phase modulator 1014 configured to apply one of four different phase shifts, for example, $\phi_a = \left[\, 0, \frac{\pi}{2}, \pi, \frac{3}{2}\pi \,\right]$, where the first two phase shifts encode a '0' bit and the second two a '1' bit. The second optical modulator 1030 is a polarization rotator apply one of four angles of polarisation, to encode for example a "0" bit on the rectilinear basis, 0° and 90°, or to encode a "1" bit on the diagonal basis, -45° and 45°.

In an embodiment, the detection apparatus 230 comprises an optical receiver, D1, such as a single photon avalanche photodetector, SPD, and processing circuitry configured to determine whether the detected photon is delayed relative to a reference time and to determine the qubit according to the determined time delay.

In an embodiment, the processing circuitry is configured to check for the presence or absence of the time delay for a received photon with respect to a reference clock signal. The reference clock signal may be provided by clocks synchronised between the qubit encoding apparatus 1010 and the qubit decoding system 600.

Referring to Figure 11, an embodiment of the invention provides QKD system 1100 comprising qubit encoding apparatus 1010 and a qubit decoding system 700, as described above with reference to Figure 7.

In an embodiment, the processing circuitry is configured to check for the presence or absence of the time delay for a received photon with respect to a reference clock signal. The reference clock signal may be provided by clocks synchronised between the qubit encoding apparatus 1010 and the qubit decoding system 600.

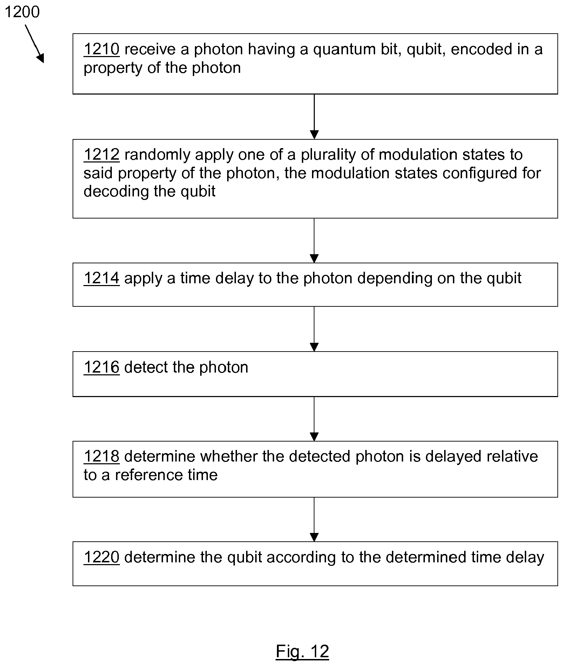

Referring to Figure 12, an embodiment of the invention provides a method 1200 of quantum bit decoding. The method comprises steps of:

>   receiving 1210 a photon having a quantum bit, qubit, encoded in a property of the photon;
>   randomly applying 1212 one of a plurality of modulation values to said property of the photon, the modulation values configured for decoding the qubit;

>   applying 1214 a time delay to the photon depending on the qubit;
>   detecting 1216 the photon;
>   determining 1218 whether the detected photon is delayed relative to a reference time; and
>   determining 1220 the qubit according to the determined time delay.

The method 1200 may be implemented using any of the qubit decoding apparatus 200, 300, 400 described above with reference to Figures 2 to 4.

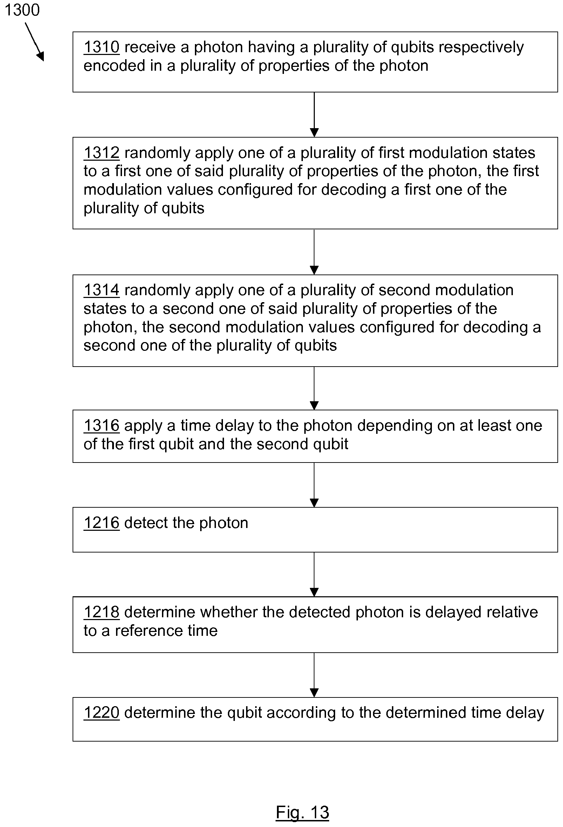

Referring to Figure 13, an embodiment of the invention provides a method 1300 of quantum bit decoding. The method of this embodiment is suitable for decoding a photon having two qubits respectively encoded in two properties of the photon.

The method 1300 comprises steps of:

>   randomly applying 1312 one of a plurality of first modulation values to a first one of said plurality of properties of the photon, the first modulation values configured for decoding a first one of the plurality of qubits;
>   randomly applying 1314 one of a plurality of second modulation values to a second one of the plurality of properties of the photon, the second modulation values configured for decoding a second one of the plurality of qubits;
>   applying 1316 a time delay to the photon depending on at least one of the first qubit and the second qubit;
>   detecting 1216 the photon; and
>   determining 1218 whether the detected photon is delayed relative to a reference time; and
>   determining 1220 the qubit according to the determined time delay.

The first property of the photon and the second property of the photon are different, non-commutable properties of the photon quantum state, as described above.

The method 1300 may be implemented using any of the qubit decoding systems 500, 600, 700 described above with reference to Figures 5 to 7.

In an embodiment, the method 1300 is adapted for decoding a photon having three qubits respectively encoded in three properties of the photon. The method 1300 comprises an additional step of randomly applying one of a plurality of third modulation values to a third property of the photon. The third modulation values are configured for decoding a third qubit. The third property is a third, different non-commutable property of the photon quantum state. The time delay depends on at least one of the first qubit, the second qubit and the third qubit.

The method of this embodiment may be implemented using the qubit decoding system 800 described above with reference to Figure 8.

In an embodiment, the time delay depends on each of the first qubit, the second qubit and the third qubit.

**Claims**

1. Quantum bit decoding apparatus configured to receive a photon having a quantum bit, qubit, encoded in a property of the photon, the apparatus comprising:

   demodulation apparatus comprising:

   an optical modulator (512) configurable to randomly apply (1212) one of a plurality of modulation values to said property of the photon, the modulation values configured for decoding the qubit; and
   an optical router (514) provided after the optical modulator and configured to route the photon according to the qubit;

   optical delay apparatus comprising:

   an optical combiner;
   a first optical path from a first output of the optical router to a first input of the optical combiner;
   a second optical path from a second output of the optical router to a second input of the optical combiner, the second optical path having a different optical path length to the first optical path to introduce a time delay between the first and second optical paths; and

   detection apparatus comprising a single optical receiver configured to detect (1216) a photon received from the optical combiner and operable to determine whether a detected photon is delayed relative to a reference time, to determine (1218) a time delay applied to the detected photon relative to the reference time, and to determine (1220) the qubit according to the determined time delay.

2. A quantum bit decoding system configured to receive a photon having a plurality of quantum bits, qubits, respectively encoded in a plurality of properties of the photon, the system comprising:

   a first decoding stage comprising:

   a first optical modulator configured to randomly apply one of a plurality of first modulation values to a first one of said plurality of properties of the photon, the first modulation values configured for decoding a first one of the plurality of qubits; and
   a first optical router configured to route the photon according to said first one of the plurality of qubits;

   an output decoding stage comprising a plurality of quantum bit decoding apparatus according to claim 1 configured to receive the photon from the first optical router, the quantum bit decoding apparatus configured to decode a second qubit encoded in a second one of said plurality of properties of the photon,
   wherein the first property of the photon and the second property of the photon are different, non-commutable properties of the photon quantum state.

3. A system as claimed in claim 2, further comprising a third decoding stage provided between the first decoding stage and the output decoding stage, the third decoding stage comprising a plurality of third optical modulators configured to receive the photon from the first decoding stage depending on said first one of the plurality of qubits and to output the photon to the output decoding stage, the third optical modulators configured to randomly apply one of a plurality of third modulation values to a third one of said plurality of properties of the photon, the third modulation values configured for decoding a third one of the plurality of qubits, the third property being a third, different non-commutable property of the photon quantum state.

4. A system as claimed in claim 2 or claim 3, wherein said non-commutable properties of the photon quantum state comprise polarization, phase and spin.

5. A system as claimed in any of claims 2 to 4, wherein the plurality of quantum bit decoding apparatus of the output decoding stage have different respective time delays between the respective first and second optical paths and wherein the plurality of quantum bit decoding apparatus have a common detection apparatus configured to detect a photon received from an optical combiner of any of said plurality of quantum bit decoding apparatus and wherein the common detection apparatus is operable to determine whether a detected photon is delayed by any one of the respective time delays relative to a reference time and to determine the qubit according to the determined time delay.

6. A communications network node comprising quantum bit decoding apparatus according to claim 1 or a quantum bit decoding system according to any of claims 2 to 5.

7. A quantum key distribution system comprising:

   quantum bit encoding apparatus configured to encode at least one quantum bit in at least one respective property of a photon; and
   quantum bit decoding apparatus according to claim 1 or a quantum bit decoding system according to any of claims 2 to 5.

8. A method of quantum bit decoding, using a quantum bit decoding apparatus according to claim 1, the method comprising steps of:

   receiving a photon having a quantum bit, qubit, encoded in a property of the photon;
   randomly applying one of a plurality of modulation values to said property of the photon, the modulation values configured for decoding the qubit;
   applying a time delay to the photon depending on the qubit;
   detecting the photon;
   determining whether the detected photon is delayed relative to a reference time; determining a time delay applied to the detected photon relative to the reference time; and
   determining the qubit according to the determined time delay.

9. A method of quantum bit decoding using a quantum bit decoding system according to claim 2, the method comprising steps of:

   receiving a photon having a plurality of qubits respectively encoded in a plurality of properties of the photon; randomly applying one of a plurality of first modulation values to a first one of said plurality of properties of the photon, the first modulation values configured for decoding a first one of the plurality of qubits;
   decoding a second one of the plurality of qubits according to the method of claim 8 using one of a plurality of quantum bit decoding apparatus according to claim 1;
   wherein the first property of the photon and the second property of the photon are different, non-commutable properties of the photon quantum state.

10. A method as claimed in claim 9 using a quantum bit decoding system according to claim 3, further comprising a step of randomly applying one of a plurality of third modulation values to a third one of said plurality of properties of the photon, the third modulation values configured for decoding a third one of the plurality of qubits, the third property being a third, different non-commutable property of the photon quantum state, wherein the time delay depends on at least one of the first qubit, the second qubit and the third qubit.

11. A method as claimed in claim 9 or claim 10, using a quantum bit decoding system according to claim 5, wherein the time delay depends on each of the qubits.

12. A method as claimed in any of claims 9 to 11 wherein said non-commutable properties of the photon quantum state comprise polarization, phase and spin.

**Patentansprüche**

1. Quantenbit-Decodiervorrichtung, die zum Empfangen eines Photons mit einem Quantenbit, Qubit, konfiguriert ist, das in einer Eigenschaft des Photons codiert ist, wobei die Vorrichtung umfasst:

   eine Demodulationsvorrichtung, die umfasst:

   einen optischen Modulator (512), der zum Anwenden (1212) eines von einer Mehrzahl von Modulationswerten nach dem Zufallsprinzip auf die Eigenschaft des Photons konfiguriert werden kann, wobei die Modulationswerte zum Decodieren des Qubits konfiguriert sind; und
   einen optischen Router (514), der nach dem optischen Modulator vorgesehen und zum Weiterleiten des Photons gemäß dem Qubit konfiguriert ist;

   eine optische Verzögerungsvorrichtung, die umfasst:

   einen optischen Kombinator;
   einen ersten optischen Pfad von einem ersten Ausgang des optischen Routers zu einem ersten Eingang des optischen Kombinators;
   einen zweiten optischen Pfad von einem zweiten Ausgang des optischen Routers zu einem zweiten Eingang des optischen Kombinators, wobei der zweite optische Pfad eine andere optische Pfadlänge als der erste optische Pfad aufweist, um eine Zeitverzögerung zwischen dem ersten und dem zweiten optischen Pfad einzuführen; und
   eine Detektionsvorrichtung, die einen einzigen optischen Empfänger umfasst, der zum Detektieren (1216) eines Photons, das vom optischen Kombinator empfangen wird, konfiguriert und so ausgelegt ist, dass er bestimmt, ob ein detektiertes Photon in Bezug auf eine Referenzzeit verzögert ist, eine auf das detektierte Photon in Bezug auf die Referenzzeit angewendete Zeitverzögerung bestimmt (1218) und das Qubit gemäß der vorbestimmten Zeitverzögerung bestimmt (1220).

2. Quantenbit-Decodiersystem, das zum Empfangen eines Photons mit einer Mehrzahl von Quantenbits, Qubits, konfiguriert ist, die jeweils in einer Mehrzahl von Eigenschaften des Photons codiert sind, wobei das System umfasst:

eine erste Decodierstufe, die umfasst:

einen ersten optischen Modulator, der zum Anwenden eines von einer Mehrzahl von ersten Modulationswerten nach dem Zufallsprinzip auf eine erste der Mehrzahl von Eigenschaften des Photons konfiguriert ist, wobei die ersten Modulationswerte zum Decodieren eines ersten der Mehrzahl von Qubits konfiguriert sind; und
einen ersten optischen Router, der zum Weiterleiten des Photons gemäß dem ersten der Mehrzahl von Qubits konfiguriert ist;

eine Ausgangsdecodierstufe, die eine Mehrzahl von Quantenbit-Decodiervorrichtungen nach Anspruch 1 umfasst, die zum Empfangen des Photons vom ersten optischen Router konfiguriert ist, wobei die Quantenbit-Decodiervorrichtung zum Decodieren eines zweiten Qubits konfiguriert ist, das in einer zweiten der Mehrzahl von Eigenschaften des Photons codiert ist, wobei die erste Eigenschaft des Photons und die zweite Eigenschaft des Photons verschiedene, unvertauschbare Eigenschaften des Photonen-Quantenzustands sind.

3. System nach Anspruch 2, ferner umfassend eine dritte Decodierstufe, die zwischen der ersten Decodierstufe und der Ausgangsdecodierstufe vorgesehen ist, wobei die dritte Decodierstufe eine Mehrzahl von dritten optischen Modulatoren umfasst, die zum Empfangen des Photons von der ersten Decodierstufe in Abhängigkeit vom ersten der Mehrzahl von Qubits und zum Ausgeben des Photons an die Ausgangsdecodierstufe konfiguriert ist, wobei die dritten optischen Modulatoren zum Anwenden eines von einer Mehrzahl von Modulationswerten nach dem Zufallsprinzip auf eine dritte der Mehrzahl von Eigenschaften des Photons konfiguriert sind, wobei die dritten Modulationswerte zum Decodieren eines dritten der Mehrzahl von Qubits konfiguriert sind, wobei die dritte Eigenschaft eine dritte, verschiedene, unvertauschbare Eigenschaft des Photonen-Quantenzustands ist.

4. System nach Anspruch 2 oder 3, wobei die unvertauschbaren Eigenschaften des Photonen-Quantenzustands Polarisation, Phase und Spin umfassen.

5. System nach einem der Ansprüche 2 bis 4, wobei die Mehrzahl von Quantenbit-Decodiervorrichtungen der Ausgangsdecodierstufe verschiedene jeweilige Zeitverzögerungen zwischen dem ersten bzw. dem zweiten optischen Weg aufweist, und wobei die Mehrzahl von Quantenbit-Decodiervorrichtungen eine gemeinsame Detektionsvorrichtung aufweist, die zum Detektieren eines Photons konfiguriert ist, das von einem optischen Kombinator einer beliebigen der Mehrzahl von Quantenbit-Decodiervorrichtungen empfangen wird, und wobei die gemeinsame Detektionsvorrichtung so ausgelegt ist, dass sie bestimmt, ob ein detektiertes Photon um eine der jeweiligen Zeitverzögerungen in Bezug auf eine Referenzzeit verzögert ist und das Qubit gemäß der bestimmten Zeitverzögerung bestimmt.

6. Kommunikationsnetzwerkknoten, umfassend eine Quantenbit-Decodiervorrichtung nach Anspruch 1 oder ein Quantenbit-Decodiersystem nach einem der Ansprüche 2 bis 5.

7. Quantenschlüsselverteilungssystem, umfassend:

eine Quantenbit-Codiervorrichtung, die zum Codieren mindestens eines Quantenbits in mindestens einer jeweiligen Eigenschaft eines Photons konfiguriert ist; und
eine Quantenbit-Decodiervorrichtung nach Anspruch 1 oder ein Quantenbit-Decodiersystem nach einem der Ansprüche 2 bis 5.

8. Verfahren zur Decodierung von Quantenbits unter Verwendung einer Quantenbit-Decodiervorrichtung nach Anspruch 1, wobei das Verfahren die folgenden Schritte umfasst:

Empfangen eines Photons mit einem Quantenbit, Qubit, das in einer Eigenschaft des Photons codiert ist;
Anwenden eines von einer Mehrzahl von Modulationswerten nach dem Zufallsprinzip auf die Eigenschaft des Photons, wobei die Modulationswerte zum Decodieren des Qubits konfiguriert sind;
Anwenden einer Zeitverzögerung auf das Photon in Abhängigkeit vom Qubit;
Detektieren des Photons;
Bestimmen, ob das detektierte Photon in Bezug auf eine Referenzzeit verzögert ist;
Bestimmen einer auf das detektierte Photon in Bezug auf die Referenzzeit angewendeten Zeitverzögerung;
Bestimmen des Qubits gemäß der bestimmten Zeitverzögerung.

9. Verfahren zur Decodierung von Quantenbits unter Verwendung eines Quantenbit-Decodiersystems nach Anspruch 2, wobei das Verfahren die folgenden Schritte umfasst:

Empfangen eines Photons mit einer Mehrzahl von Quantenbits, Qubits, die jeweils in einer Mehrzahl von Eigenschaften des Photons codiert sind;

Anwenden eines von einer Mehrzahl von ersten Modulationswerten nach dem Zufallsprinzip auf eine erste der Mehrzahl von Eigenschaften des Photons, wobei die ersten Modulationswerte zum Decodieren eines ersten der Mehrzahl von Qubits konfiguriert sind;

Decodieren eines zweiten der Mehrzahl von Qubits gemäß dem Verfahren nach Anspruch 8 unter Verwendung einer von einer Mehrzahl von Quantenbit-Decodiervorrichtungen nach Anspruch 1;

wobei die erste Eigenschaft des Photons und die zweite Eigenschaft des Photons verschiedene, unvertauschbare Eigenschaften des Photonen-Quantenzustands sind.

10. Verfahren hach Anspruch 9 unter Verwendung eines Quantenbit-Decodiersystems nach Anspruch 3, ferner umfassend einen Schritt des Anwendens eines von einer Mehrzahl von dritten Modulationswerten nach dem Zufallsprinzip auf eine dritte der Mehrzahl von Eigenschaften des Photons, wobei die dritten Modulationswerte zum Decodieren eines dritten der Mehrzahl von Qubits konfiguriert sind, wobei die dritte Eigenschaft eine dritte, verschiedene, unvertauschbare Eigenschaft des Photonen-Quantenzustands ist, wobei die Zeitverzögerung von mindestens einem von dem ersten Qubit, dem zweiten Qubit und dem dritten Qubit abhängt.

11. Verfahren nach Anspruch 9 oder 10 unter Verwendung eines Quantenbit-Decodiersystems nach Anspruch 5, wobei die Zeitverzögerung von jedem der Qubits abhängt.

12. Verfahren nach einem der Ansprüche 9 bis 11, wobei die unvertauschbaren Eigenschaften des Photonen-Quantenzustands Polarisation, Phase und Spin umfassen.

**Revendications**

1. Appareil de décodage de bits quantiques configuré pour recevoir un photon ayant un bit quantique, qubit, codé dans une propriété du photon, l'appareil comprenant :

un appareil de démodulation comprenant :

un modulateur optique (512) configurable pour appliquer aléatoirement (1212) l'une d'une pluralité de valeurs de modulation à ladite propriété du photon, les valeurs de modulation étant configurées pour décoder le qubit ; et

un routeur optique (514) prévu après le modulateur optique et configuré pour acheminer le photon selon le qubit ;

un appareil de retard optique comprenant :

un combineur optique ;
un premier trajet optique depuis une première sortie du routeur optique jusqu'à une première entrée du combineur optique ;
un deuxième trajet optique depuis une deuxième sortie du routeur optique jusqu'à une deuxième entrée du combineur optique, le deuxième trajet optique présentant une longueur de trajet optique différente de celle du premier trajet optique pour introduire un retard entre les premier et deuxième trajets optiques ; et

un appareil de détection comprenant un récepteur optique unique configuré pour détecter (1216) un photon reçu depuis le combineur optique et exploitable pour déterminer si un photon détecté est ou non retardé par rapport à un temps de référence, pour déterminer (1218) un retard appliqué au photon détecté par rapport au temps de référence, et pour déterminer (1220) le qubit en fonction du retard déterminé.

2. Système de décodage de bits quantiques configuré pour recevoir un photon ayant une pluralité de bits quantiques, qubits, respectivement codés dans une pluralité de propriétés du photon, le système comprenant :

un premier étage de décodage comprenant :

un premier modulateur optique configuré pour appliquer aléatoirement l'une d'une pluralité de premières valeurs de modulation à une première de ladite pluralité de propriétés du photon, les premières valeurs de modulation étant configurées pour décoder un premier de la pluralité de qubits ; et
un premier routeur optique configuré pour acheminer le photon en fonction dudit premier de la pluralité de qubits ;

un étage de décodage de sortie comprenant une pluralité d'appareils de décodage de bits quantiques selon la revendication 1 configurés pour recevoir le photon depuis le premier routeur optique, l'appareil de décodage de bits quantiques étant configuré pour décoder un deuxième qubit codé dans une deuxième de ladite pluralité de propriétés du photon,

dans lequel la première propriété du photon et la deuxième propriété du photon sont des propriétés non commutables différentes de l'état quantique de photon.

3. Système selon la revendication 2, comprenant en outre un troisième étage de décodage prévu entre le premier étage de décodage et l'étage de décodage de sortie, le troisième étage de décodage comprenant une pluralité de troisièmes modulateurs optiques configurés pour recevoir le photon depuis le premier étage de décodage en fonction dudit premier de la pluralité de qubits et pour délivrer le photon à l'étage de décodage de sortie, les troisièmes modulateurs optiques étant configurés pour appliquer aléatoirement l'une d'une pluralité de troisièmes valeurs de modulation à une troisième de ladite pluralité de propriétés du photon, les troisièmes valeurs de modulation étant configurées pour décoder un troisième de la pluralité de qubits, la troisième propriété étant une troisième propriété non commutable différente de l'état quantique de photon.

4. Système selon la revendication 2 ou 3, dans lequel lesdites propriétés non commutables de l'état quantique de photon comprennent une polarisation, une phase et un spin.

5. Système selon l'une quelconque des revendications 2 à 4, dans lequel la pluralité d'appareils de décodage de bits quantiques de l'étage de décodage de sortie ont des retards respectifs différents entre les premier et deuxième trajets optiques respectifs et dans lequel la pluralité d'appareils de décodage de bits quantiques comportent un appareil de détection commun configuré pour détecter un photon reçu depuis un combineur optique de l'un quelconque de ladite pluralité d'appareils de décodage de bits quantiques et dans lequel l'appareil de détection commun est exploitable pour déterminer si un photon détecté est ou non retardé par l'un quelconque des retards respectifs par rapport à un temps de référence et pour déterminer le qubit en fonction du retard déterminé.

6. Nœud de réseau de communication comprenant un appareil de décodage de bits quantiques selon la revendication 1 ou un système de décodage de bits quantiques selon l'une quelconque des revendications 2 à 5.

7. Système de distribution de clé quantique comprenant :

un appareil de codage de bits quantiques configuré pour coder au moins un bit quantique dans au moins une propriété respective d'un photon ; et

un appareil de décodage de bits quantiques selon la revendication 1 ou un système de décodage de bits quantiques selon l'une quelconque des revendications 2 à 5.

8. Procédé de décodage de bits quantiques, en utilisant un appareil de décodage de bits quantiques selon la revendication 1, le procédé comprenant les étapes suivantes :

la réception d'un photon ayant un bit quantique, qubit, codé dans une propriété du photon ; l'application aléatoire de l'une d'une pluralité de valeurs de modulation à ladite propriété du photon, les valeurs de modulation étant configurées pour décoder le qubit ; l'application d'un retard au photon en fonction du qubit ; la détection du photon ; la détermination si le photon détecté est ou non retardé par rapport à un temps de référence ; la détermination d'un retard appliqué au photon détecté par rapport au temps de référence ; et la détermination du qubit en fonction du retard déterminé.

9. Procédé de décodage de bits quantiques en utilisant un système de décodage de bits quantiques selon la revendication 2, le procédé comprenant les étapes suivantes :

la réception d'un photon ayant une pluralité de qubits respectivement codés dans une pluralité de propriétés du photon ; l'application aléatoire de l'une d'une pluralité de première valeurs de modulation à une première de ladite pluralité de propriétés du photon, les premières valeurs de modulation étant configurées pour décoder un premier de la pluralité de qubits ; le décodage d'un deuxième de la pluralité de qubits conformément au procédé selon la revendication 8 en utilisant l'un d'une pluralité d'appareils de décodage de bits quantiques selon la revendication 1 ; dans lequel la première propriété du photon et la deuxième propriété du photon sont des propriétés non commutables différentes de l'état quantique de photon.

10. Procédé selon la revendication 9 en utilisant un système de décodage de bits quantiques selon la revendication 3, comprenant en outre une étape de l'application aléatoire de l'une d'une pluralité de troisièmes valeurs de modulation à une troisième de ladite pluralité de propriétés du photon, les troisièmes valeurs de modulation étant configurées pour décoder un troisième de la pluralité de qubits, la troisième propriété étant une troisième propriété non commutable différente de l'état quantique de photon, dans lequel le retard dépend d'au moins l'un parmi le premier qubit, le deuxième qubit et le troisième qubit.

11. Procédé selon la revendication 9 ou 10 en utilisant un système de décodage de bits quantiques selon la revendication 5, dans lequel le retard dépend de chacun des qubits.

12. Procédé selon l'une quelconque des revendications 9 à 11, dans lequel lesdites propriétés non commutables de l'état quantique de photon comprennent une polarisation, une phase et un spin.

*(a)*

*(b)*

PRIOR ART

Fig. 1

16

Fig. 2

Fig. 3

Fig. 4

Fig. 5

Fig. 6

Fig. 7

850

800

512 Optical Modulator

514 Router

812 Optical Modulator

812 Optical Modulator

200 Qubit decoding apparatus

200 Qubit decoding apparatus

510

810

520

Fig. 8

200

220

210

224

910 Qubit encoding apparatus

212 Optical modulator

Splitter

Combiner

D1

214

222

230

226

900

Fig. 9

Fig. 10

Fig. 11

1200

1210 receive a photon having a quantum bit, qubit, encoded in a property of the photon

1212 randomly apply one of a plurality of modulation states to said property of the photon, the modulation states configured for decoding the qubit

1214 apply a time delay to the photon depending on the qubit

1216 detect the photon

1218 determine whether the detected photon is delayed relative to a reference time

1220 determine the qubit according to the determined time delay

Fig. 12

1300

1310 receive a photon having a plurality of qubits respectively encoded in a plurality of properties of the photon

1312 randomly apply one of a plurality of first modulation states to a first one of said plurality of properties of the photon, the first modulation values configured for decoding a first one of the plurality of qubits

1314 randomly apply one of a plurality of second modulation states to a second one of said plurality of properties of the photon, the second modulation values configured for decoding a second one of the plurality of qubits

1316 apply a time delay to the photon depending on at least one of the first qubit and the second qubit

1216 detect the photon

1218 determine whether the detected photon is delayed relative to a reference time

1220 determine the qubit according to the determined time delay

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007116286 A1
- GB 2550263 A
- CN 110224819 A

### Non-patent literature cited in the description

- **A. RUIZ-ALBA et al.** Practical Quantum Key Distribution based on the BB84 protocol. *Waves,* 2011, 4-14
- **YAN HUI et al.** Efficient Phase-Encoding Quantum Key Generation with Narrow-Band Single Photons. *Chinese Physics Letters,* 20 May 2011, vol. 28 (7
- **GIUSEPPE VALLONE et al.** Free-space quantum key distribution by rotation-invariant twisted photons. *Physics Review Letters,* 2014, vol. 113, 060503